# EUROPEAN PATENT APPLICATION

(11) **EP 4 845 264 A1**
(43) Date of publication of application: **25.11.2026**
(21) Application number: 25751447.1
(22) Date of filing: 27.01.2025
(51) Int. Cl.: H04W 72/0446

(54) **COMMUNICATION METHOD AND APPARATUS**

(30) Priority: 07.02.2024 CN 202410175873
(71) Applicant: Huawei Technologies Co., Ltd., Shenzhen, Guangdong 518129 (CN)
(72) Inventor: XIE, Song, Shenzhen, Guangdong 518129 (CN); LIU, Wei, Shenzhen, Guangdong 518129 (CN)
(74) Representative: Gill Jennings & Every LLP
(86) International application number: PCT/CN2025/075548
(87) International publication number: WO 2025/167847

(57) **Abstract**

This application provides a communication method and apparatus. The method includes: sending first information, where the first information indicates an analog weighting mode, a minimum resource unit corresponding to the analog weighting mode, and azimuths of M beams, and M is a positive integer; receiving second information, where the second information indicates N beams among the M beams and transmission resources respectively corresponding to the N beams, N is a positive integer, N≤M, and a transmission resource corresponding to each beam includes at least one minimum resource unit; and transmitting a signal on the transmission resources respectively corresponding to the N beams. According to the foregoing design, communication between an antenna unit and a distributed unit can be implemented, so that the distributed unit feeds back the second information in real time.

## Description

### CROSS-REFERENCE TO RELATED APPLICATIONS

This application claims priority to Chinese Patent Application No. 202410175873.X, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Multi-antenna technologies may be defined as a series of technologies that use a plurality of antennas on a transmitter or a receiver in conjunction with signal processing. In the multi-antenna technologies, in addition to a conventional time domain and frequency domain, a space domain is introduced to improve system capacity and coverage. The multi-antenna technologies have attracted much attention since long term evolution (long term evolution, LTE) systems. With evolution of communication technologies, such as 5th generation (5th generation, 5G) mobile communication systems or 6th generation (6th generation, 6G) mobile communication systems, a larger system capacity is required. Meanwhile, the introduction of high frequencies also brings a new challenge to system coverage. To further improve system capacity and coverage, the multi-antenna technologies have become basic technologies.

Currently, an interface between a baseband unit (baseband unit, BBU) and an active antenna unit (active antenna unit, AAU) is generally not open externally, and is a proprietary interface of an equipment vendor. However, with evolution of communication technologies, the interface between the BBU and the AAU may be exposed externally. Therefore, how to design communication between the BBU and the AAU becomes a problem worthy of attention.

### SUMMARY

Embodiments of this application provide a communication method and apparatus, to implement communication between a BBU and an AAU.

According to a first aspect, this application provides a communication method. The method is performed by an antenna unit, or a chip, a unit, or a module that has a function of the antenna unit. The method includes: sending first information, where the first information indicates an analog weighting mode, a minimum resource unit corresponding to the analog weighting mode, and azimuths of M beams, and M is a positive integer; receiving second information, where the second information indicates N beams among the M beams and transmission resources respectively corresponding to the N beams, N is a positive integer, N≤M, and a transmission resource corresponding to each beam includes at least one minimum resource unit; and transmitting a signal on the transmission resources respectively corresponding to the N beams.

According to the foregoing design, the antenna unit may notify a distributed unit of the analog weighting mode supported by the antenna unit, the minimum resource unit corresponding to the analog weighting mode, and the azimuths of the M beams, so that the antenna unit can receive the second information fed back by the distributed unit in real time, and learn of, based on the second information, specific beams to be selected to transmit the signal on specific corresponding transmission resources. The foregoing method is applicable to a scenario in which an interface between the antenna unit and the distributed unit is exposed.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, when the first information is sent, the first information is sent through a first interface; and when the second information is received, the second information is received through a second interface, where the first interface is different from the second interface.

In a possible design, the first information further indicates a maximum quantity of beams, and N is less than or equal to the maximum quantity of beams. In this way, the maximum quantity of beams may be indicated to restrict a quantity of antennas selected by a distributed unit, and also control signaling overheads between the antenna unit and the distributed unit.

In a possible design, the first information further indicates a reporting time interval of the second information. In this way, the reporting time interval of the second information may be indicated to control signaling overheads between the antenna unit and a distributed unit.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

According to a second aspect, this application provides a communication method. The method is performed by a distributed unit, or a chip, a unit, or a module that has a function of the distributed unit. The method includes: receiving first information, where the first information indicates an analog weighting mode, a minimum resource unit corresponding to the analog weighting mode, and azimuths of M beams, and M is a positive integer; and sending second information, where the second information indicates N beams among the M beams and transmission resources respectively corresponding to the N beams, N is a positive integer, N≤M, and a transmission resource corresponding to each beam includes at least one minimum resource unit.

According to the foregoing design, the distributed unit may learn of the analog weighting mode supported by an antenna unit, the minimum resource unit corresponding to the analog weighting mode, and the azimuths of the M beams, so that some or all of the M beams can be selected in real time, the transmission resource corresponding to each beam is determined, and the beams and the transmission resources are notified to the antenna unit by using the second information. The foregoing method is applicable to a scenario in which an interface between the antenna unit and the distributed unit is exposed.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, when the first information is received, the first information is received through a first interface; and when the second information is sent, the second information is sent through a second interface, where the first interface is different from the second interface.

In a possible design, the first information further indicates a maximum quantity of beams, and N is less than or equal to the maximum quantity of beams.

In a possible design, the first information further indicates a reporting time interval of the second information.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

According to a third aspect, this application provides a communication apparatus. The apparatus includes a transceiver unit and a processing unit. The transceiver unit is configured to receive and send information, and the processing unit is configured to: send first information through the transceiver unit, where the first information indicates an analog weighting mode, a minimum resource unit corresponding to the analog weighting mode, and azimuths of M beams, and M is a positive integer; receive second information, where the second information indicates N beams among the M beams and transmission resources respectively corresponding to the N beams, N is a positive integer, N≤M, and a transmission resource corresponding to each beam includes at least one minimum resource unit; and transmit a signal on the transmission resources respectively corresponding to the N beams.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, the transceiver unit is configured to: when sending the first information, send the first information through a first interface; and when receiving the second information, receive the second information through a second interface, where the first interface is different from the second interface.

In a possible design, the first information further indicates a maximum quantity of beams, and N is less than or equal to the maximum quantity of beams.

In a possible design, the first information further indicates a reporting time interval of the second information.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

According to a fourth aspect, this application provides a communication apparatus. The apparatus includes a transceiver unit, configured to receive and send information, and a processing unit, configured to: receive first information through the transceiver unit, where the first information indicates an analog weighting mode, a minimum resource unit corresponding to the analog weighting mode, and azimuths of M beams, and M is a positive integer; and send second information, where the second information indicates N beams among the M beams and transmission resources respectively corresponding to the N beams, N is a positive integer, N≤M, and a transmission resource corresponding to each beam includes at least one minimum resource unit.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, the transceiver unit is configured to: when receiving the first information, receive the first information through a first interface; and when sending the second information, send the second information through a second interface, where the first interface is different from the second interface.

In a possible design, the first information further indicates a maximum quantity of beams, and N is less than or equal to the maximum quantity of beams.

In a possible design, the first information further indicates a reporting time interval of the second information.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

According to a fifth aspect, this application provides a communication apparatus. The communication apparatus may be a first apparatus, or may be a module or a unit (for example, a chip, a chip system, or a circuit) that is in the first apparatus and that is in one-to-one correspondence with the method/operations/steps/actions described in either the first aspect or the second aspect, or can be used in combination with the first apparatus.

According to a sixth aspect, this application provides a communication device, including at least one processing element and at least one storage element. The at least one storage element is configured to store a program and data. The at least one processing element is configured to read and execute the program and the data that are stored in the storage element, so that the method described in any one of the possible designs of either the first aspect or the second aspect of this application is implemented.

According to a seventh aspect, this application further provides a computer program. When the computer program is run on a computer, the computer is enabled to perform the method according to any one of the possible designs of either the first aspect or the second aspect.

According to an eighth aspect, this application provides a communication apparatus. The apparatus includes an interface circuit and at least one processor. The interface circuit is configured to provide an input and/or output of a program or instructions for the at least one processor. The at least one processor is configured to execute the program or the instructions, so that the communication apparatus can implement the method according to any one of the possible designs of either the first aspect or the second aspect.

In a possible manner, the communication apparatus includes the at least one memory, and the at least one memory is configured to store the program or the instructions.

According to a ninth aspect, this application provides a computer storage medium. The storage medium stores a software program, and when the software program is read and executed by one or more processors, the method according to any one of the possible designs of either the first aspect or the second aspect may be implemented.

According to a tenth aspect, this application provides a computer program product including instructions. When the instructions are run on a computer, the computer is enabled to perform the method according to any one of the possible designs of either the first aspect or the second aspect.

According to an eleventh aspect, this application provides a chip system. The chip system includes at least one chip and a memory, and the at least one chip is configured to read and execute a program stored in the memory, to implement the method according to any one of the possible designs of either the first aspect or the second aspect.

According to a twelfth aspect, this application provides an access network device. The access network device includes at least one antenna unit, at least one distributed unit, and at least one central unit, the antenna unit performs the method according to any one of the possible designs of the first aspect, and the distributed unit performs the method according to any one of the possible designs of the second aspect.

### BRIEF DESCRIPTION OF DRAWINGS

FIG. 1 is a diagram of a structure of a communication system;
FIG. 2 is a diagram of a possible structure of an access network device;
FIG. 3 is a diagram of a possible frequency domain unit;
FIG. 4 is an overview flowchart of a communication method;
FIG. 5 is a diagram of a beam supported by an RU;
FIG. 6 is a diagram of communication between an access network device and a terminal;
FIG. 7 is a diagram of a transmission unit corresponding to a beam;
FIG. 8 is another diagram of a transmission unit corresponding to a beam;
FIG. 9 is a diagram of a structure of a communication apparatus; and
FIG. 10 is a diagram of a structure of a communication apparatus.

### DESCRIPTION OF EMBODIMENTS

The following describes specific implementations of this application by using examples with reference to the accompanying drawings in embodiments of this application. However, implementations of this application may further include a combination of the embodiments without departing from the spirit or scope of this application. For example, other embodiments may be used and structural changes may be made. Therefore, the detailed descriptions of the following embodiments should not be understood in a restrictive sense. Terms used in embodiments of this application are merely used to describe specific embodiments of this application, but are not intended to limit this application.

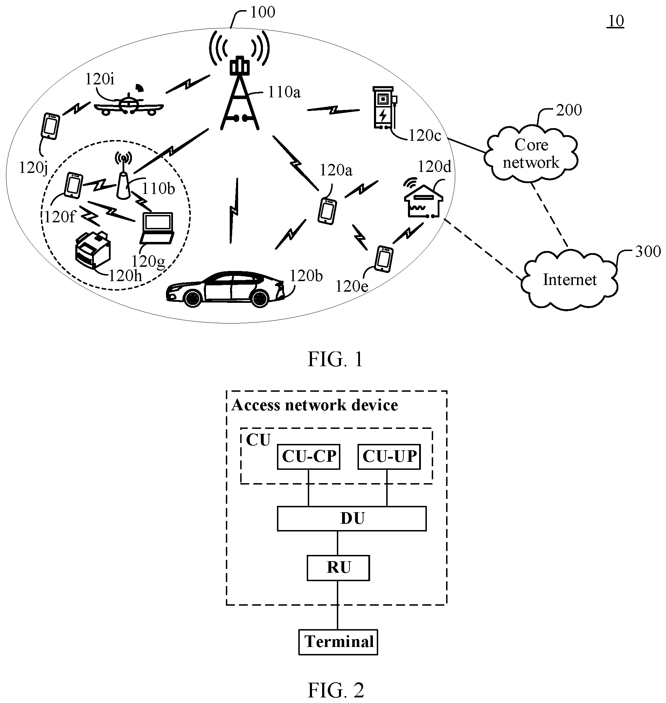

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network. In addition, the core network 200 may further communicate with the Internet 300.

The RAN 100 may be a cellular system related to the 3rd generation partnership project (3rd Generation Partnership Project, 3GPP), for example, a 4G or 5G mobile communication system, or a future-oriented evolved system (for example, a 6G mobile communication system). The RAN 100 may alternatively be an open access network (open RAN, O-RAN or ORAN), or a cloud radio access network (cloud radio access network, CRAN). The RAN 100 may alternatively be a communication system that integrates two or more of the foregoing systems.

The RAN node 110 sometimes may also be referred to as an access network device, a RAN entity, an access node, or the like, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for a base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function. For ease of description, the RAN node is referred to as an access network device below.

In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

FIG. 2 is a diagram of a possible structure of an access network device. The access network device may include one or more central units (central units, CUs) and one or more distributed units (distributed units, DUs). The access network device may further include one or more radio units (radio units, RUs). For clarity, FIG. 2 shows only one CU, one DU, and one RU. The CU may be further classified into a CU-control plane (control plane, CP) and a CU-user plane (user plane, UP). This is not limited in this application. The CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. In this application, any unit in the CU (or the CU-CP or the CU-UP), the DU, and the RU may be implemented by using a software module, a hardware module, or a combination of a software module and a hardware module.

It may be understood that, in this application, communication between the BBU and the AAU may be replaced with communication between the DU and the RU.

For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The RU implements some physical layer processing functions, radio frequency processing, and a function related to an active antenna. The foregoing configuration of the CU, the DU, and the RU is merely an example. Alternatively, functions of the CU, the DU, and the RU may be configured as needed.

In this application, any unit in the CU (or the CU-CP or the CU-UP), the DU, and the RU may be implemented by using a software module, a hardware module, or a combination of a software module and a hardware module.

The following describes some terms in embodiments of this application, to facilitate understanding of a person skilled in the art.

### 1. Beam

A beam used to send a signal may be referred to as a transmission beam (transmission beam, Tx beam), and the transmission beam may also be distribution of signal strength formed in different directions in space after the signal is transmitted through an antenna. Similarly, a beam used to receive a signal may be referred to as a reception beam (reception beam, Rx beam), and the reception beam may also be distribution of signal strength, in different directions in space, of a radio signal received from an antenna.

In addition, the beam may be a wide beam, a narrow beam, or a beam of another type. A technology for forming the beam may be a beamforming technology or another technology.

### 2. Beamforming

A communication apparatus may improve communication performance through beamforming. The beamforming may specifically refer to a technology in which the communication apparatus processes a transmitted or received signal through a plurality of antennas, to implement directional and spatial adjustment of a transmission beam or a reception beam, so that quality of a signal received by a receive end device can be better, to improve communication performance. The beamforming is generally classified into digital beamforming (digital beamforming, DBF), analog beamforming (analog beamforming, ABF), and hybrid beamforming (hybrid beamforming, HBF). The DBF specifically means that the communication apparatus processes a transmitted signal or a received signal in digital domain (for example, uses different weights for transmitted signals on different antennas), to implement beamforming. The ABF specifically means that a network device processes a transmitted signal in analog domain, to implement beamforming. The HBF means that a transmitted signal is processed in both digital domain and analog domain, and beamforming is implemented through joint processing.

Hybrid beamforming structures include a fully-connected structure and a fixed subarray architecture. Due to cost considerations, a current mainstream structure is the fixed subarray architecture, which gradually evolves to the fully-connected structure with development of technologies. Weights for hybrid beamforming are classified into analog weights and digital weights, which are respectively used for analog beamforming and digital beamforming. This application mainly focuses on the analog weights.

In this application, an analog weighting mode may be understood as a granularity at which the analog weights take effect or an application manner of the analog weights. Analog weighting modes may include a time domain weighting mode, a frequency domain weighting mode, and a hybrid weighting mode. For example, the analog weighting mode is related to a hardware design of an RU (or an AAU). For example, the analog weighting modes supported by the RU (or the AAU) may be implemented by using different phase shifter structures.

The time domain weighting mode means that an analog weight is adjusted (or configured) based on a time domain granularity, that is, a beam is adjusted (or configured) based on a time domain. A minimum resource unit corresponding to the time domain weighting mode is a time domain unit. For example, the time domain unit may be a slot (slot) or a symbol (symbol). A hardware structure of an RU supporting the time domain weighting mode is that all antennas of the RU correspond to a same group of phase shifters. A granularity of the minimum resource unit also depends on the hardware structure of the RU. For example, the granularity of the minimum resource unit is determined based on a phase shifter capability.

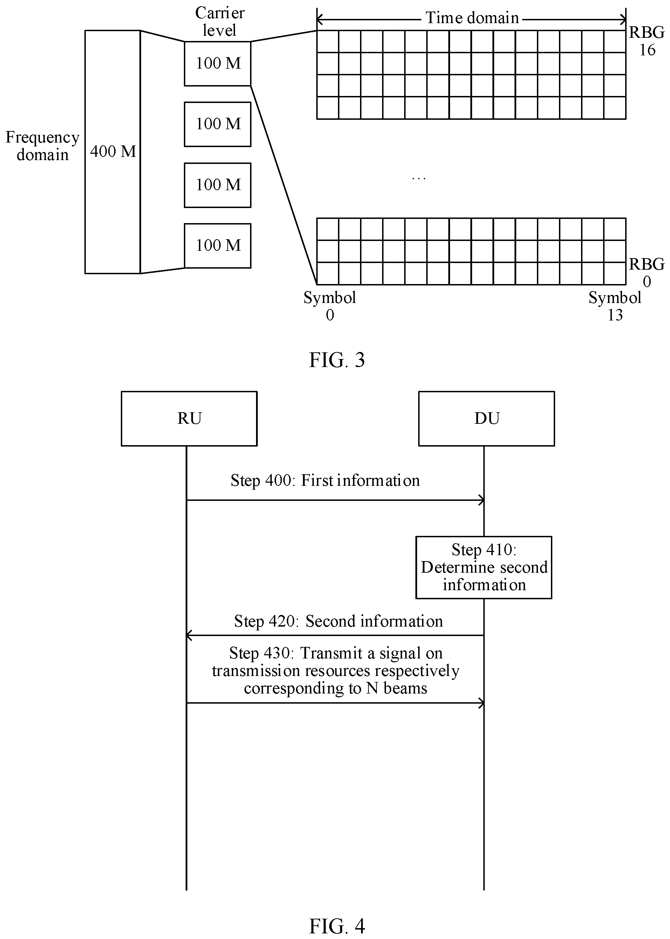

The frequency domain weighting mode means that an analog weight is adjusted (or configured) based on a frequency domain granularity, that is, a beam is adjusted (or configured) based on a frequency domain. A minimum resource unit corresponding to the frequency domain weighting mode is a frequency domain unit. For example, the frequency domain unit is any one of a resource unit, a frequency band, a carrier, a resource block, and a resource block group. FIG. 3 shows examples of several possible frequency domain units. A hardware structure of an RU supporting the frequency domain weighting mode is that all antennas of the RU correspond to different phase shifters. A granularity of the minimum resource unit also depends on the hardware structure of the RU.

The hybrid weighting mode means that an analog weight is adjusted (or configured) based on a combination of a time domain granularity and a frequency domain granularity, that is, a beam is adjusted (or configured) based on the combination of the time domain granularity and the frequency domain granularity. A minimum resource unit corresponding to the hybrid weighting mode is a time domain unit and a frequency domain unit. For specific content of the time domain unit and the frequency domain unit, refer to the foregoing related descriptions. A hardware structure of an RU supporting the hybrid weighting mode is that antennas of the RU are divided into X groups based on a quantity X of supported frequency bands, where a same group of antennas correspond to a same group of phase shifters, different groups of antennas correspond to different groups of phase shifters, the X groups of antennas are in one-to-one correspondence with the X groups of phase shifters, and X is an integer greater than or equal to 2. A granularity of the minimum resource unit also depends on the hardware structure of the RU.

Based on the foregoing network system architectures and content described in the foregoing related technologies, embodiments of this application provide a communication method. An example in which the method is performed by a DU and an RU is used for description. In addition, it should be understood that the DU may alternatively be replaced with a chip, a unit, or a module having a function of the DU. The RU may alternatively be replaced with a chip, a unit, or a module having a function of the RU. The following method is applicable a scenario in which an interface between an antenna unit and a distributed unit is exposed, and is also applicable to a scenario in which the interface between the antenna unit and the distributed unit is an internal proprietary interface.

As shown in FIG. 4, the method includes the following steps.

Step 400: The RU sends first information to the DU. Correspondingly, the DU receives the first information from the RU.

For example, the first information indicates an analog weighting mode, a minimum resource unit corresponding to the analog weighting mode, and azimuths of M beams.

That the first information indicates the analog weighting mode may be understood as that the first information indicates an analog weighting mode supported by the RU. It can be learned from the foregoing related content that the analog weighting mode supported by the RU and the minimum resource unit corresponding to the analog weighting mode are related to a hardware structure of the RU.

The M beams are beams supported by the RU, and M is a positive integer. That the first information further indicates the azimuths of the M beams may be understood as that the first information indicates a correspondence between the M beams and the corresponding azimuths, where the M beams are in one-to-one correspondence with M azimuths. For example, the first information includes indexes of the M beams and the azimuths respectively corresponding to the M beams.

In addition, the RU further stores a correspondence between the M beams and corresponding analog weights. M analog weights may be used to generate the M beams. A quantity of beams supported by the RU and corresponding analog weights are also related to the hardware structure of the RU, and may be specifically determined based on factors such as a quantity of antenna elements included in the RU and a fully-connected structure.

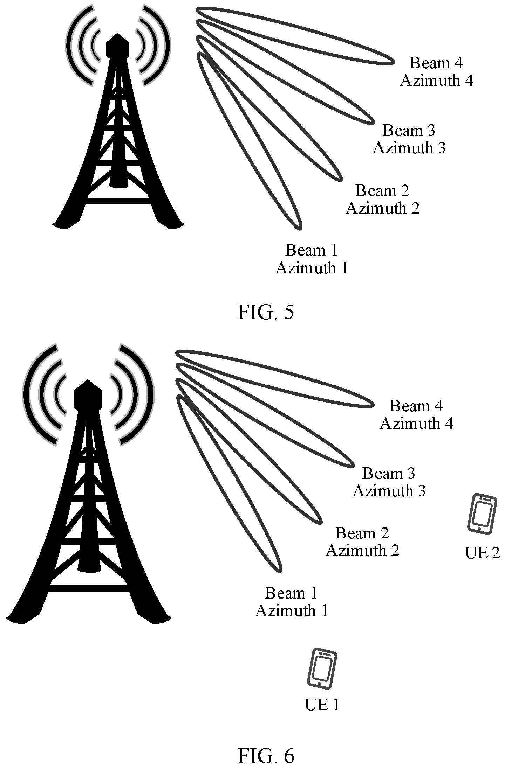

As shown in FIG. 5, the RU supports four beams, and the four beams correspond to four analog weights. The RU stores a correspondence between the four beams and the corresponding analog weights. The first information may include indexes of the four beams and azimuths respectively corresponding to the four beams.

In a possible design, the first information further indicates a maximum quantity of beams. The maximum quantity of beams is used to restrict a quantity of beams selected by the DU. In other words, the quantity of beams selected by the DU is not greater than the maximum quantity of beams, that is, N is less than or equal to the maximum quantity of beams, so that signaling overheads between the DU and the RU can be controlled.

In a possible design, the first information further indicates a reporting time interval of second information. Alternatively, the first information further indicates a reporting periodicity of the second information. The DU may send the second information based on the reporting time interval, to avoid sending the second information a plurality of times, and effectively control signaling overheads between the DU and the RU. In addition, the DU may periodically send the second information, to adjust a transmission beam.

Step 410: The DU determines the second information.

The second information indicates N beams among the M beams and transmission resources respectively corresponding to the N beams, N is a positive integer, N≤M, and a transmission resource corresponding to each beam includes at least one minimum resource unit.

For example, an access network device receives an uplink signal from a terminal, and determines N beams based on the uplink signal.

For example, the terminal sends a sounding reference signal (sounding reference signal, SRS) to the access network device, and a base station may receive the SRS through different reception beams, and determine a reception beam with the best signal quality, to use the reception beam as a transmission beam, that is, determine a beam corresponding to the terminal. Alternatively, it may be understood as that the base station may determine, from the M beams in the foregoing manner, a beam corresponding to the terminal. As shown in FIG. 6, UE 1 sends an SRS, and the access network device may determine a beam 1 in four beams by receiving the SRS. Similarly, UE 2 sends an SRS, and the access network device may further determine a beam 3 in the four beams by receiving the SRS.

For example, the second information may include indexes of the N beams. For example, with reference to FIG. 6, the access network device may determine the beam 1 and the beam 3, and include an index of the beam 1 and an index of the beam 3 in the second information.

Further, the access network device may determine, based on the analog weighting mode and the corresponding minimum resource unit, the transmission resources respectively corresponding to the N beams. The transmission resources respectively corresponding to the N beams may depend on a load of the access network device, a channel state, to-be-transmitted downlink data of different terminals, or the like. This is not limited in this application.

With reference to FIG. 6, if an amount of to-be-transmitted downlink data of the UE 1 is greater than an amount of to-be-transmitted downlink data of the UE 2, a quantity of transmission resources corresponding to the beam 1 is greater than a quantity of transmission resources corresponding to the beam 3. In this case, if the first information indicates that the analog weighting mode is the time domain weighting mode or the hybrid weighting mode, and the minimum resource unit corresponding to the analog weighting mode is a symbol, the access network device may determine, based on the first information, that a quantity of symbols corresponding to the beam 1 is greater than a quantity of symbols corresponding to the beam 3.

It may be understood that a specific manner in which the access network device determines a transmission resource corresponding to a beam is not limited in this application.

For example, if the analog weighting mode is the time domain weighting mode or the hybrid weighting mode, and the minimum resource unit corresponding to the analog weighting mode is a symbol, the second information may include a start symbol and a symbol length of the transmission resource corresponding to each of the N beams, or the second information may include a start symbol and an end symbol of the transmission resource corresponding to each of the N beams. For details, refer to the following Example 1 and Example 2.

Step 420: The DU sends the second information to the RU. Correspondingly, the RU receives the second information from the DU.

For example, for step 400, the RU sends the first information to the DU through a first interface. For step 420, the DU may send the second information to the RU through a second interface. The second interface is different from the first interface. It may be understood that both the first interface and the second interface are logical interfaces.

Step 430: The RU transmits a signal on the transmission resources respectively corresponding to the N beams.

An i^{th} beam in the N beams is used as an example. The RU may determine, based on a stored correspondence between the M beams and corresponding analog weights, an analog weight corresponding to the i^{th} beam, generate the i^{th} beam based on the analog weight corresponding to the i^{th} beam, and transmit the signal on a transmission resource corresponding to the i^{th} beam. Herein, i is a positive integer, and i is less than or equal to N.

With reference to FIG. 6, the second information may include the index of the beam 1, the index of the beam 3, the transmission resource corresponding to the beam 1, and the transmission resource corresponding to the beam 3. Therefore, the RU may determine, based on the index of the beam 1, an analog weight corresponding to the beam 1, generate the beam 1 based on the analog weight, and send the signal to the UE 1 on the transmission resource corresponding to the beam 1; and determine, based on the index of the beam 3, an analog weight corresponding to the beam 3, generate the beam 3 based on the analog weight, and send the signal to the UE 2 on the transmission resource corresponding to the beam 3.

According to the foregoing method, communication between the DU and the RU can be implemented. The DU may learn of, based on the first information, the analog weighting mode supported by the RU, the corresponding minimum resource unit, and each beam supported by the RU, so that the DU can select some or all of the beams supported by the RU, and further determine, based on the analog weighting mode and the corresponding minimum resource unit, a transmission resource corresponding to each selected beam. The DU may send the second information to the RU, to notify the RU of the selected beam and the corresponding transmission resource, so that the RU can transmit the signal on the transmission resource corresponding to the selected beam.

The following further describes the embodiment shown in FIG. 4 with reference to specific examples.

### Example 1

The RU sends the first information to the DU through the first interface, where the first information indicates the analog weighting mode being the time domain weighting mode, the minimum resource unit corresponding to the analog weighting mode being a symbol, and four beams and corresponding azimuths. It is assumed that the four beams are a beam 1, a beam 2, a beam 3, and a beam 4. In addition, the first information may further indicate that the reporting time interval of the second information is 14 symbols, and the maximum quantity of beams is 3.

The DU determines the second information based on the received SRS sent by each terminal. The second information indicates [symbol 0, 4] [index of the beam 1] [symbol 5, 6] [index of the beam 2] [symbol 11, 3] [index of the beam 3].

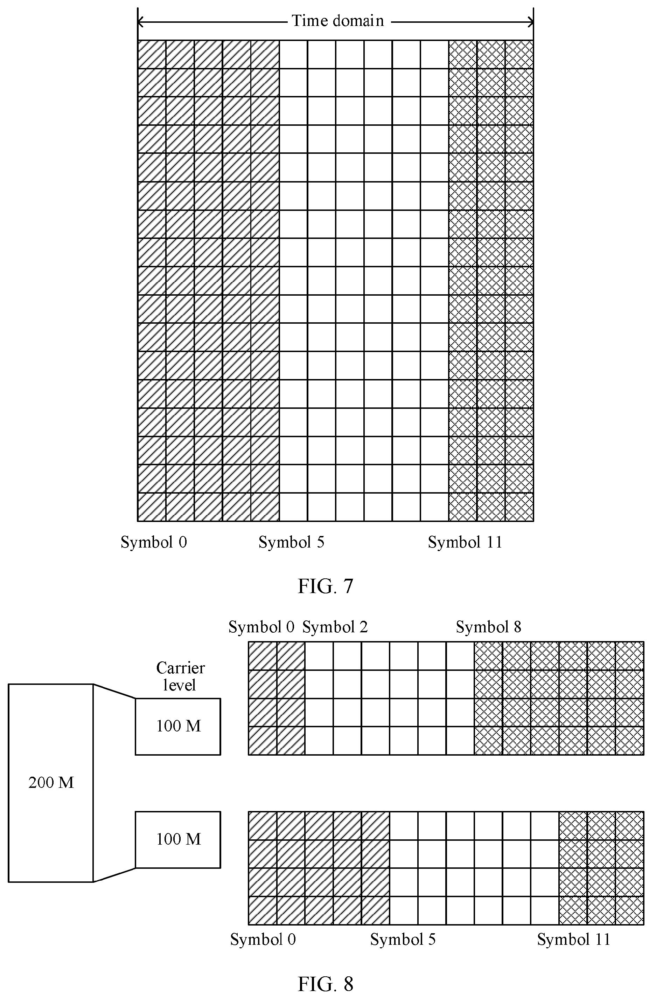

With reference to FIG. 7, the second information may be understood as follows: The second information indicates the beam 1, a transmission resource corresponding to the beam 1 starts from the symbol 0, and a symbol length is 4. In other words, the transmission resource corresponding to the beam 1 is the symbol 0 to a symbol 4. The second information further indicates the beam 2, a transmission resource corresponding to the beam 2 starts from the symbol 5, and a symbol length is 6. The second information further indicates the beam 3, a transmission resource corresponding to the beam 3 starts from the symbol 11, and a symbol length is 3.

In addition, the quantity of beams selected by the DU is 3, which is equal to the maximum quantity of beams, and the DU may update the second information every 14 symbols, and report updated second information.

The DU sends the second information to the RU through the second interface. The RU determines, based on the second information, an analog weight corresponding to the beam 1, an analog weight corresponding to the beam 2, and an analog weight corresponding to the beam 3, sends the signal on the symbol 0 to the symbol 4 that correspond to the beam 1, sends the signal on the symbol 5 to a symbol 10 that correspond to the beam 2, and sends the signal on the symbol 11 to a symbol 13 that correspond to the beam 3.

### Example 2

The RU sends the first information to the DU through the first interface, where the first information indicates the analog weighting mode being the hybrid weighting mode, the minimum resource unit corresponding to the analog weighting mode being a symbol and a carrier, and four beams and corresponding azimuths. The first information may further indicate that the RU supports a carrier 1 and a carrier 2. It is assumed that the four beams are a beam 1, a beam 2, a beam 3, and a beam 4. In addition, the first information may further indicate that the reporting time interval of the second information is 14 symbols, and the maximum quantity of beams is 3.

The DU determines the second information based on the received SRS sent by each terminal. The second information indicates:
[carrier 1] [symbol 0, 2] [index of the beam 1] [symbol 2, 6] [index of the beam 3] [symbol 8, 6] [index of the beam 4]; and
[carrier 2] [symbol 0, 4] [index of the beam 2] [symbol 5, 6] [index of the beam 4].

With reference to FIG. 8, the second information may be understood as follows: The second information indicates the beam 1, a transmission resource corresponding to the beam 1: a time domain resource starting from the symbol 0, a symbol length of 2, and a frequency domain resource being the carrier 1; the beam 3, a transmission resource corresponding to the beam 3: a time domain resource starting from the symbol 2, a symbol length of 6, and a frequency domain resource being the carrier 1; the beam 4, a transmission resource corresponding to the beam 4: a time domain resource starting from the symbol 8, a symbol length of 6, and a frequency domain resource being the carrier 1; the beam 2, a transmission resource corresponding to the beam 2: a time domain resource starting from the symbol 0, a symbol length of 4, and a frequency domain resource being the carrier 2; and the beam 4, a transmission resource corresponding to the beam 4: a time domain resource starting from the symbol 5, a symbol length of 6, and a frequency domain resource being the carrier 2.

In addition, a quantity of beams selected by the DU for each carrier is not greater than 3, and the DU may update the second information every 14 symbols, and report updated second information.

The DU sends the second information to the RU through the second interface. The RU determines, based on the second information, an analog weight corresponding to the beam 1, an analog weight corresponding to the beam 2, an analog weight corresponding to the beam 3, and an analog weight corresponding to the beam 4, sends the signal on the carrier 1 on the symbol 0 and a symbol 1 that correspond to the beam 1, sends the signal on the carrier 1 on the symbol 2 to a symbol 7 that correspond to the beam 3, sends the signal on the carrier 1 on the symbol 8 to a symbol 13 that correspond to the beam 4, sends the signal on the carrier 2 on a symbol 0 to the symbol 4 that correspond to the beam 2, and sends the signal on the carrier 2 on the symbol 5 to a symbol 10 that correspond to the beam 4.

It may be understood that, to implement functions in the foregoing embodiments, the antenna unit and the distributed unit include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

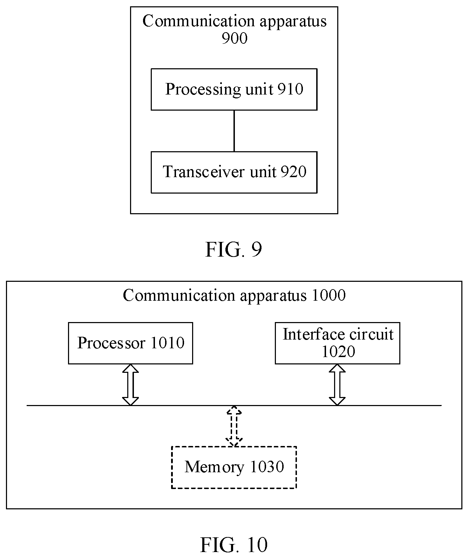

FIG. 9 and FIG. 10 each are a diagram of a structure of a possible communication apparatus according to an embodiment of this application. These communication apparatuses may be configured to implement functions of the antenna unit or the distributed unit in the foregoing method embodiments, and therefore can also implement beneficial effect of the foregoing method embodiments.

As shown in FIG. 9, a communication apparatus 900 includes a processing unit 910 and a transceiver unit 920. The communication apparatus 900 is configured to implement functions of the antenna unit and the distributed unit in the foregoing method embodiments.

When the communication apparatus 900 is configured to implement the functions of the antenna unit in the foregoing method embodiments,
the transceiver unit 920 is configured to receive and send information, and the processing unit 910 is configured to: send first information through the transceiver unit 920, where the first information indicates an analog weighting mode, a minimum resource unit corresponding to the analog weighting mode, and azimuths of M beams, and M is a positive integer; receive second information, where the second information indicates N beams among the M beams and transmission resources respectively corresponding to the N beams, N is a positive integer, N≤M, and a transmission resource corresponding to each beam includes at least one minimum resource unit; and transmit a signal on the transmission resources respectively corresponding to the N beams.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, the transceiver unit 920 is configured to: when sending the first information, send the first information through a first interface; and when receiving the second information, receive the second information through a second interface, where the first interface is different from the second interface.

In a possible design, the first information further indicates a maximum quantity of beams, and N is less than or equal to the maximum quantity of beams.

In a possible design, the first information further indicates a reporting time interval of the second information.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

When the communication apparatus 900 is configured to implement the functions of the distributed unit in the foregoing method embodiments,
the transceiver unit 920 is configured to receive and send information, and the processing unit 910 is configured to: receive first information through the transceiver unit 920, where the first information indicates an analog weighting mode, a minimum resource unit corresponding to the analog weighting mode, and azimuths of M beams, and M is a positive integer; and send second information, where the second information indicates N beams among the M beams and transmission resources respectively corresponding to the N beams, N is a positive integer, N≤M, and a transmission resource corresponding to each beam includes at least one minimum resource unit.

In a possible design, the analog weighting mode is a time domain weighting mode, and the minimum resource unit corresponding to the analog weighting mode is a time domain unit; or the analog weighting mode is a frequency domain weighting mode, and the minimum resource unit corresponding to the analog weighting mode is a frequency domain unit; or the analog weighting mode is a hybrid weighting mode, and the minimum resource unit corresponding to the analog weighting mode is a time domain unit and a frequency domain unit.

In a possible design, the time domain unit is a slot or a symbol.

In a possible design, the frequency domain unit is any one of a resource unit, a frequency band, a carrier, a resource block, and a resource block group.

In a possible design, the transceiver unit 920 is configured to: when receiving the first information, receive the first information through a first interface; and when sending the second information, send the second information through a second interface, where the first interface is different from the second interface.

In a possible design, the first information further indicates a maximum quantity of beams, and N is less than or equal to the maximum quantity of beams.

In a possible design, the first information further indicates a reporting time interval of the second information.

In a possible design, the analog weighting mode is the time domain weighting mode or the hybrid weighting mode, and the minimum resource unit corresponding to the analog weighting mode includes a symbol; and the second information includes a start symbol and a symbol length of the transmission resource corresponding to each of the N beams, or the second information includes a start symbol and an end symbol of the transmission resource corresponding to each of the N beams.

For more detailed descriptions of the processing unit 910 and the transceiver unit 920, directly refer to the related descriptions in the foregoing method embodiments. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030 that is configured to store instructions executed by the processor 1010, input data required by the processor 1010 to run the instructions, or data generated after the processor 1010 runs the instructions.

When the communication apparatus 1000 is configured to implement the method shown in FIG. 4, the processor 1010 is configured to implement a function of the processing unit 910, and the interface circuit 1020 is configured to implement a function of the transceiver unit 920.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

This application provides another example of an apparatus. A communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. An example in which the communication apparatus includes a processor and a memory is used. As shown in FIG. 10, a communication apparatus 1000 includes a processor 1010 and a memory 1030. The processor 1010 is coupled to the memory 1030. The memory 1030 stores instructions. When the instructions stored in the memory 1030 are executed by the processor 1010, the communication apparatus 1000 performs the method performed by each unit in the foregoing embodiments.

Method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in the foregoing unit. The processor and the storage medium may alternatively exist in the foregoing unit as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state drive. The computer-readable storage medium may be a volatile or non-volatile storage medium, or may include two types of storage media: a volatile storage medium and a non-volatile storage medium.

In this application, "at least one" refers to one or more, and "a plurality of" refers to two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
sending first information, wherein the first information indicates an analog weighting mode, a minimum resource unit corresponding to the analog weighting mode, and azimuths of M beams, and M is a positive integer;
receiving second information, wherein the second information indicates N beams among the M beams and transmission resources respectively corresponding to the N beams, N is a positive integer, N≤M, and a transmission resource corresponding to each beam comprises at least one minimum resource unit; and
transmitting a signal on the transmission resources respectively corresponding to the N beams.

2. The method according to claim 1, wherein the analog weighting mode is a time domain weighting mode, and the minimum resource unit corresponding to the analog weighting mode is a time domain unit; or
the analog weighting mode is a frequency domain weighting mode, and the minimum resource unit corresponding to the analog weighting mode is a frequency domain unit; or
the analog weighting mode is a hybrid weighting mode, and the minimum resource unit corresponding to the analog weighting mode is a time domain unit and a frequency domain unit.

3. The method according to claim 2, wherein the time domain unit is a slot or a symbol.

4. The method according to claim 2, wherein the frequency domain unit is any one of a resource unit, a frequency band, a carrier, a resource block, and a resource block group.

5. The method according to any one of claims 1 to 4, wherein sending the first information comprises:
sending the first information through a first interface; and
receiving the second information comprises:
receiving the second information through a second interface, wherein
the first interface is different from the second interface.

6. The method according to any one of claims 1 to 5, wherein the first information further indicates a maximum quantity of beams, and N is less than or equal to the maximum quantity of beams.

7. The method according to any one of claims 1 to 6, wherein the first information further indicates a reporting time interval of the second information.

8. The method according to any one of claims 2 to 4, wherein the analog weighting mode is the time domain weighting mode or the hybrid weighting mode, and the minimum resource unit corresponding to the analog weighting mode comprises a symbol; and
the second information comprises a start symbol and a symbol length of the transmission resource corresponding to each of the N beams; or
the second information comprises a start symbol and an end symbol of the transmission resource corresponding to each of the N beams.

9. A communication method, wherein the method comprises:
receiving first information, wherein the first information indicates an analog weighting mode, a minimum resource unit corresponding to the analog weighting mode, and azimuths of M beams, and M is a positive integer; and
sending second information, wherein the second information indicates N beams among the M beams and transmission resources respectively corresponding to the N beams, N is a positive integer, N≤M, and a transmission resource corresponding to each beam comprises at least one minimum resource unit.

10. The method according to claim 9, wherein the analog weighting mode is a time domain weighting mode, and the minimum resource unit corresponding to the analog weighting mode is a time domain unit; or
the analog weighting mode is a frequency domain weighting mode, and the minimum resource unit corresponding to the analog weighting mode is a frequency domain unit; or
the analog weighting mode is a hybrid weighting mode, and the minimum resource unit corresponding to the analog weighting mode is a time domain unit and a frequency domain unit.

11. The method according to claim 10, wherein the time domain unit is a slot or a symbol.

12. The method according to claim 10, wherein the frequency domain unit is any one of a resource unit, a frequency band, a carrier, a resource block, and a resource block group.

13. The method according to any one of claims 9 to 12, wherein receiving the first information comprises:
receiving the first information through a first interface; and
sending the second information comprises:
sending the second information through a second interface, wherein
the first interface is different from the second interface.

14. The method according to any one of claims 9 to 13, wherein the first information further indicates a maximum quantity of beams, and N is less than or equal to the maximum quantity of beams.

15. The method according to any one of claims 9 to 14, wherein the first information further indicates a reporting time interval of the second information.

16. The method according to any one of claims 10 to 15, wherein the analog weighting mode is the time domain weighting mode or the hybrid weighting mode, and the minimum resource unit corresponding to the analog weighting mode comprises a symbol; and
the second information comprises a start symbol and a symbol length of the transmission resource corresponding to each of the N beams; or
the second information comprises a start symbol and an end symbol of the transmission resource corresponding to each of the N beams.

17. A communication apparatus, comprising a unit or a module configured to perform the method according to any one of claims 1 to 16.

18. A communication apparatus, wherein the communication apparatus comprises at least one processor, and the at least one processor is configured to perform the method according to any one of claims 1 to 16.

19. A computer-readable storage medium, wherein the computer-readable storage medium comprises a program, and when the program is run on an apparatus, the apparatus is enabled to perform the method according to any one of claims 1 to 16.

20. A computer program product, wherein the computer program product comprises a program or instructions, and when the program or the instructions are executed by an apparatus, the apparatus is enabled to perform the method according to any one of claims 1 to 16.
